# EUROPÄISCHE PATENTSCHRIFT

(11) **EP 0 243 416 B1**
(45) Veröffentlichungstag und Bekanntmachung des Hinweises auf die Patenterteilung: **13.01.1993**
(21) Anmeldenummer: 86906268.7
(22) Anmeldetag: 21.10.1986
(51) Int. Cl.: B01F 3/02, F16K 11/22

(54) **Verfahren zum Betreiben einer Gaseinlassvorrichtung für Reaktionsgefässe**
Process for operating a gas inlet device for reactors
Procédé pour la mise en oeuvre d'un dispositif d'admission de gaz pour des réacteurs

(30) Priorität: 22.10.1985 DE 3537544
(43) Veröffentlichungstag der Anmeldung: 04.11.1987
(73) Patentinhaber: AIXTRON GMBH, 52072 Aachen (DE)
(72) Erfinder: JÜRGENSEN, Holger, D-5100 Aachen (DE)
(74) Vertreter: Steinmann, Otto C.
(86) Internationale Anmeldenummer: DE8600423
(87) Internationale Veröffentlichungsnummer: WO8702598

(56) Entgegenhaltungen:
- FR-A- 2 455 923
- US-A- 3 556 147
- US-A- 4 281 683

## Beschreibung

### Technisches Gebiet

Die Erfindung bezieht sich auf ein Verfahren zum Betreiben einer Gaseinlaßvorrichtung für Reaktionsgefäße, insbesondere für die III-V-Halbleiterherstellung gemäß dem Oberbegriff des Patentanspruchs 1.

Bei Reaktionsgefäßen, die insbesondere für die III-V-Halbleiterherstellung geeignet sind, besteht allgemein das Problem, nacheinander eine Reihe von Reaktionsgasen sowie ein Träger- bzw. Schutzgas in das Reaktionsgefäß einzuleiten. Dabei sollen die Reaktionsgase nicht nur mit bestimmten Drücken, sondern auch in einer genau definierten zeitlichen Abfolge mit "Scharfen" Konzentrationsübergängen eingeleitet werden können.

### Stand der Technik

In der Vergangenheit sind in der Regel Gaseinlaßvorrichtungen verwendet worden, die für jedes Reaktions- bzw. Trägergas ein Absperrventil sowie gegebenenfalls Dosiereinrichtungen aufweisen. Dabei sind u.a. Ventile in Betracht gezogen worden, wie sie beispielsweise in "PATENTS ABSTRACT OF JAPAN" M-201, Vol.7, 1983 oder der US-A-3 556 147 beschrieben sind.

Es hat sich jedoch herausgestellt, daß es mit Gaseinlaßvorrichtungen, bei denen bekannte Ventiltypen, beispielsweise die in "PATENTS ABSTRACT OF JAPAN" oder in der US-A3 556 147 beschriebenen 4-Wege-Ventile mit zwei einseitig, unabhängig arbeitenden Ventilkolben verwendet werden, nicht möglich ist, die Reaktionsgase zeitlich nacheinander in rascher Folge in das Reaktionsgefäß einzubringen, ohne daß Restgasverunreinigungen entstehen. Insbesondere stören die bei den bekannten Gaseinlaßvorrichtungen auftretenden Schaltverzögerungen auf Grund der unumgänglichen Totvolumina und/oder von gleichzeitig abgesperrten Leitungen. Darüberhinaus können durch An- bzw. Abschalten verschiedener Gasströme Druckschwankungen im Reaktionssystem auftreten, die für den Prozeß störend sein können.

Ferner ist es mit den bekannten Ventileinrichtungen nur mit großem Aufwand möglich, die für die III-V-Halbleiterherstellung erforderlichen Leckraten von kleiner als 10⁻⁸ mbar*1/sec zu erreichen.

### Darstellung der Erfindung

Der Erfindung liegt die Aufgabe zugrunde, ein Verfahren zum Betreiben einer Gaseinlaßvorrichtung für Reaktionsgefäße, insbesondere für die III-V-Halbleiterherstellung, anzugeben, bei dem die Schaltverzögerungen auf Grund des Umschaltens von verschiedenen Reaktionsgas-Strömen minimal sind und darüberhinaus praktisch keine Druckschwankungen beim Umschalten auftreten.

Eine erfindungsgemäße Lösung dieser Aufgabe ist mir ihren Weiterbildungen in den Patentansprüchen gekennzeichet.

Bei dem erfindungsgemäßen Verfahren wird eine Ventileinrichtung verwendet, die für jedes Reaktionsgas ein Mehr-Wege-Ventil aufweist, das einen ständig vom Trägergas durchströmten Durchgangskanal besitzt. Je nach Schaltstellung des Ventils ist der Reaktionsgas-Einlaß mit dem vom Trägergas durchströmten Durchgangskanal und damit mit dem Reaktionsgas-Einlaß des Reaktionsgefäßes oder einem zweiten Ausgangsanschluß verbunden, so daß kein durch diesen Einlaß einströmendes Reaktionsgas in das Reaktionsgefäß gelangen kann. Das erfindungsgemäße Verfahren hat eine Reihe von Vorteilen:
Da der Reaktionsgas-Strom nicht an- bzw. abgeschaltet, sondern lediglich zwischen dem Durchgangskanal und dem zweiten Ausgangsanschluß umgeschaltet wird, entstehen praktisch keine Druckschwankungen. Darüberhinaus sind die Schaltverzögerungen auf Grund von Totvolumina etc. in der Praxis zu vernachlässigen, da sämtliche Reaktionsgas-Einlässe mit dem ständig vom Trägergas durchströmten Kanal in dem Betriebszustand verbunden sind, in dem dieses Reaktionsgas in den Reaktionsraum einströmen soll.

Vorteilhafte Weiterbildungen der Erfindung sind in den Unteransprüchen gekennzeichnet:
Die im Anspruch 2 gekennzeichnete Ausbildung mit einem gemeinsamen Abgaskanal, mit der die zweiten Ausläße der einzelnen Mehr-Wege-Ventile verbunden sind, ist insbesondere dann vorteilhaft, wenn die Abgase giftige Bestandteile und/oder Bestandteile enthalten, die aus dem Abgas wiedergewonnen werden sollen.

Als Mehr-Wege-Ventile können beispielsweise 4-Wege-Ventile (Anspruch 3) oder 5-Wege-Ventile (Anspruch 6) verwendet werden.

Im Anspruch 4 ist eine besonders einfache Ausbildung eines bei dem erfindungsgemäßen Verfahren zum Betreiben einer Gaseinlaßvorrichtung für Reaktionsgefäße verwendeten 4-Wege-Ventil beschrieben. Das 4-Wege-Ventil besteht aus zwei einzeln betätigbaren Absperrventilen, von denen eines normalerweise geschlossen und das andere normalerweise geöffnet ist. Das normalerweise geschlossene Absperrventil ist in der Verbindung zwischen dem Durchgangskanal und dem Reaktionsgas-Eingangsanschluß angeordnet, während das normalerweise geöffnete Absperrventil in der Verbindung zwischen dem Reaktionsgas-Eingangsanschluß und dem zweiten Ausgangsanschluß angeordnet ist, über den das Reaktionsgas dann abströmt, wenn es nicht in den Reaktionsraum eingelassen werden soll.

Durch die in Anspruch 5 gekennzeichnete Anordnung der Eingangs- und Ausgangsanschlüsse sowie der Absperrventile erhält man bei 4-Wege-Ventilen kürzest mögliche Verbindungen zwischen den einzelnen Anschlüssen und den Ventilen, so daß eventuell noch bestehende Totvolumina weiter herabgesetzt werden.

Die Verwendung von 5-Wege-Ventilen als Mehr-Wege-Ventile hat den Vorteil, daß der Ventilblock zusätzlich einen Abgas-Durchgangskanal aufweisen kann, durch den nicht nur der Leitungsaufwand zur Verbindung der einzelnen Ventile, sondern auch das Volumen der Abgasleitung weiter herabgesetzt wird.

Die Verwendung von Faltenbalg-gedichteten Absperrventilen gemäß Anspruch 7 erlaubt in einfacher Weise, die insbesondere für die III-V-Halbleiterherstellung erforderliche Leckrate von kleiner als 10⁻⁸ mbar*l/sec zu realisieren.

Von besonderem Vorteil ist es in jedem Falle, wenn gemäß Anspruch 8 die Ventile elektrisch oder pneumatisch betätigbar sind. Eine derartige elektrische oder pneumatische Betätigung erlaubt es, eine Steuereinheit für die erfindungsgemäße Gaseinlaßvorrichtung vorzusehen. Diese Steuereinheit kann die einzelnen Mehr-Wege-Ventile entsprechend dem gewünschten Einlaßprogramm für die verschiedenen Reaktionsgase umschalten. Darüber hinaus kann die Steuereinheit auch die einzelnen Reaktionsgas-Ströme auf vorgegebene stationäre Werte beispielsweise mit einem entsprechenden Drossel-bzw. Proportionalventil einstellen.

Im Anspruch 9 ist eine vorteilhafte Ausbildung eines erfindungsgemäß ausgebildeten 4-Wege-Ventils angegeben. Durch Modifizieren eines handelsüblichen 3-Wege-Ventils ist es mit geringen Kosten möglich, die erfindungsgemäßen 4-Wege-Ventile herzustellen. Beispielsweise können die erfindungsgemäßen 4-Wege-Ventile durch Modifikation eines handelsüblichen ASM-3-Wege-Ventils hergestellt werden.

Die Totvolumina, Steuerzeiten sowie der Gasverbrauch können weiter reduziert werden, wenn die Einlässe und Auslässe der Ventile Anschlüsse aufweisen, die ein direktes Verbinden der einzelnen Ventile der Gaseinlaßvorrichtung sowie des Reaktionsgefässes erlauben. Derartige Anschlüsse sind beispielsweise VCR-Male und VCR-FEMALE-Schraubanschlüsse. Beispielsweise wird der Einlaß für den Trägergasstrom mit einem VCR-MALE-Anschluß versehen, während der Auslaß mit einem VCR-FEMALE-Anschluß versehen wird (Anspruch 10).

Insbesondere bei teueren Reaktionsgasen ist es durch die Verwendung der erfindungsgemäß vorgesehenen Steuereinheit (Anspruch 11) möglich, daß die Steuereinheit den stationären Reaktionsgas-Strom erst kurze Zeit vor dem Zeitpunkt, zu dem der Reaktionsgas-Strom in das Reaktionsgefäß eingeleitet werden soll, auf einen vorgebbaren stationären Wert einstellt, um nicht unnötig teures Reaktionsgas durch den zweiten Ausgangsanschluß "abströmen" zu lassen.

Ein weiterer Vorteil des erfindungsgemäßen Verfahrens zum Betreiben einer Gaseinlaßvorrichtung für Reaktionsgefäße ist, daß zum Lecktest beide Absperrventile geschlossen werden können. Der Lecktest kann auch durch die Steuereinheit automatisiert werden, die zum Lecktest beide Absperrventile schließt und die Leckrate mißt.

### Kurze Beschreibung der Zeichnung

Die Erfindung wird nachstehend anhand eines Ausführungsbeispiels unter Bezugnahme auf die Zeichnung näher beschrieben, in der zeigen:
- Figur 1: schematisch eine in dem erfindungsgemäßen Verfahren verwendete Gaseinlaßvorrichtung,
- Figur 2a und 2b: den Aufbau eines mit einem Durchgangskanal versehenen 4-Wege-Ventils,
- Figur 3a, 3b und 3c: den Aufbau eines mit mehreren Durchgangskanälen versehenen 5-Wege-Ventils.

### Beschreibung von Ausführungsbeispielen

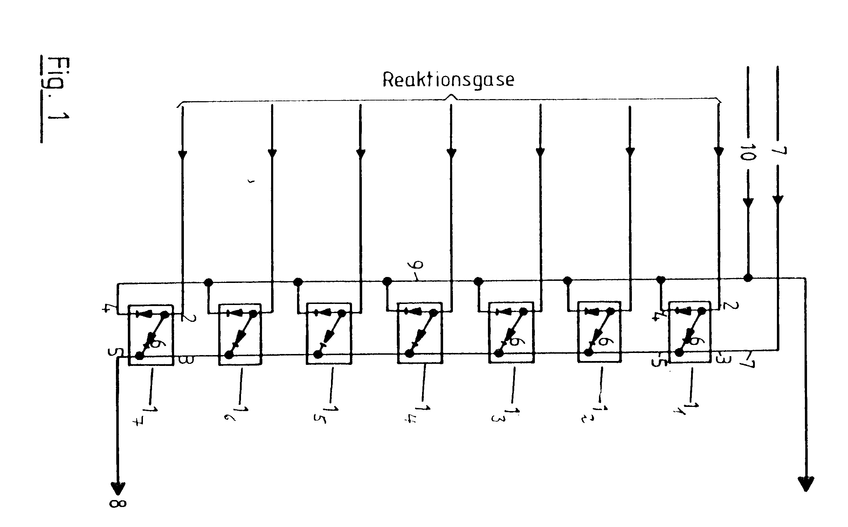

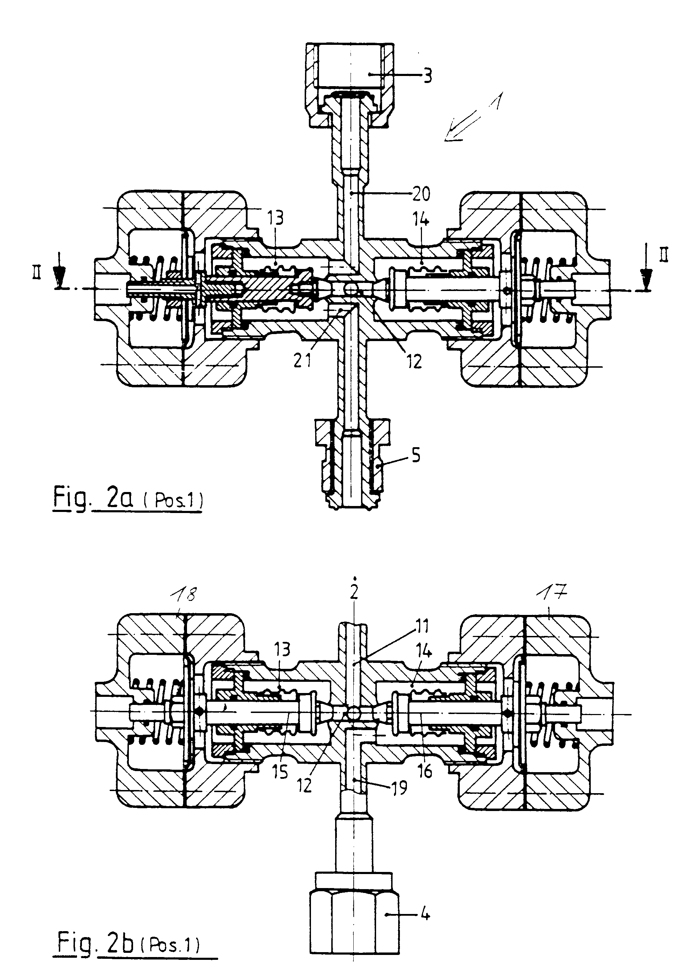

Figur 1 zeigt schematisch eine in dem erfindungsgemäßen Verfahren verwendete Gaseinlaßvorrichtung für Reaktionsgefäße, insbesondere für die III-V-Halbleiterherstellung. Die erfindungsgemäße Gaseinlaßvorrichtung weist eine Reihe von nur schematisch dargestellten 4-Wege-Ventilen 1₁, 1₂, bis 1₇ auf. Die 4-Wege-Ventile 1, deren Aufbau in Verbindung mit den Figuren 2a und 2b näher erläutert werden wird, haben jeweils 4 Anschlüsse 2, 3, 4 und 5. Die Anschlüsse 3 und 5 sind dabei durch einen Durchgangskanal 6 laufend verbunden, während der Anschluß 2 je nach Schaltstellung des Ventils entweder mit dem Durchgangskanal 6 oder dem Anschluß 4 verbunden ist.

Die einzelnen Ventile 1₁ bis 1₇ sind so miteinander verschaltet, daß mit dem Anschluß 3 des Ventils 1₁ eine Leitung 7 für einen Trägergas-Strom verbunden ist, während die Anschlüsse 5 jeweils mit dem Anschluß 3 des nächsten Ventils verbunden sind. Der Anschluß 5 des Ventils 1₇ ist über eine Leitung 8 mit dem Reaktionsgefäß verbunden. Hierdurch entsteht ein durchgehender Kanal für den Trägergas-Strom. Die Anschlüsse 2 der verschiedenen Ventile sind mit Vorratsgefäßen für die einzelnen Reaktionsgase verbunden, während die Anschlüsse 4 mit einem gemeinsamen Abluftkanal 9 verbunden sind. Der Abluftkanal 9 wird mittels einer Abluftspül-Leitung 10 laufend gespült. Ferner können noch nicht dargestellte Dosier- bzw. Proportionalstellventile vorgesehen werden, mit denen die einzelnen Reaktionsgasströme eingestellt werden können.

Die in Verbindung mit Figur 1 erläuterte Gaseinlaßvorrichtung erlaubt es, dem ständig über die Leitung 7, die einzelnen Durchgangskanäle 6 sowie die Leitung 8 in den Reaktor strömenden Trägergas-Strom je nach Schaltstellung der einzelnen Ventile 1₁ bis 1₇ die einzelnen Reaktionsgase beizumischen.

Da die Reaktionsgasströme durch die Ventile 1 lediglich umgeschaltet werden, entstehen keine Druckschwankungen beim An- bzw. Abschalten von Reaktionsgasen. Darüberhinaus ist das Totvolumen der erfindungsgemäßen Gaseinlaßvorrichtung zum einen durch den in Verbindung mit den Figuren 2a und 2b im folgenden näher erläuterten Aufbau der einzelnen Ventile sowie durch die ständige Trägergas-Spülung der Kanäle äußerst gering, so daß schnelle Schaltzeiten für die einzelnen Reaktionsgase erreicht werden können. Die Anstiegs- und Abfallzeiten der einzelnen Reaktionsgas-Beimischungen können dabei im Bereich deutlich unter einer Sekunde liegen.

Figur 2a zeigt einen Querschnitt durch ein erfindungsgemäßes 4-Wege-Ventil, Figur 2b einen Querschnitt durch das Ventil bei der Linie II-II in Figur 2a.

Das pauschal mit 1 bezeichnete Ventil weist - wie bereits in Verbindung mit Figur 1 beschrieben - vier Anschlüsse 2, 3, 4 und 5 auf. Die vier Anschlüsse 2 - 5 sind sternförmig angeordnet. Der Anschluß 2 ist über einen Kanal 11 mit einem Kanal 12 verbunden, dessen beide Enden in Hohlräume 13 und 14 münden, in denen die Ventilstößel 15 und 16 der Faltenbalgventile 17 und 18 angeordnet sind. Die Ventilstößel 15 und 16 dichten dabei jeweils die Enden des Kanals 12 ab. Der Anschluß 4 ist über einen Kanal 19 mit dem Hohlraum 14 verbunden, während die Anschlüsse 3 und 5 über Kanäle 20 und 21 mit dem Hohlraum 13 verbunden sind.

Ferner sind bei den gezeigten Ausführungsbeispielen die Ventile pneumatisch betätigbar, wobei das Ventil 17 normalerweiser geöffnet und das Ventil 18 normalerweise geschlossen ist. Die pneumatische Betätigungseinrichtung der Ventile ist bekannt, so daß sie im folgenden nicht näher erläutert werden wird.

Wie bereits in Verbindung mit Figur 1 beschrieben, ist der Anschluß 2 mit einem Reaktionsgas-Behälter und der Anschluß 3 mit einer Leitung bzw. mit dem Anschluß 5 des stromaufwärts angeordneten Ventils verbunden, durch das ein Trägergas-Strom fließt. Der Trägergas-Strom kann dabei durch den Anschluß 3, den Kanal 20, den Hohlraum 13 den Kanal 21 und den Anschluß 5 unabhängig von der Schaltstellung der Stößel 15 und 16 durch das 4-Wege-Ventill hindurchströmen. Der Reaktionsgas-Strom, der durch den Anschluß 2 in das Ventil eintritt, fließt im nichtbetätigten Zustand durch den Kanal 11, den Kanal 12, den Hohlraum 14, den Kanal 19 zu dem Anschluß 4 und damit in den Abluftkanal 9. Im betätigten Zustand, in dem der Stößel 16 den Kanal 12 verschließt und der Stößel 15 zurückgezogen ist, fließt der Reaktionsgasstrom über den Kanal 11 und den Kanal 12 in den Hohlraum 13 und damit über den Kanal 21 zum Ausgangsanschluß 5.

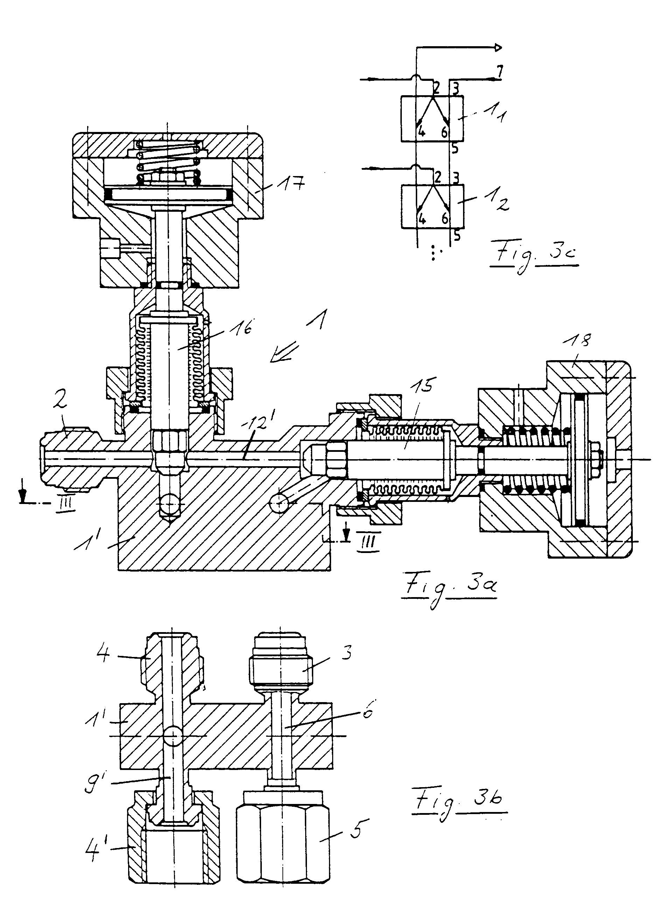

Fig. 3a zeigt einen Längsschnitt durch ein erfindungsgemäß ausgebildetes 5-Wege-Ventil; Fig. 3b zeigt einen Querschnitt bei der Linie III-III in Fig. 3a und Fig. 3c die Verschaltung der einzelnen Ventile 1₁, 1₂,... in einer erfindungsgemäßen Gaseinlaßvorrichtung entsprechend der Darstellung in Fig.1.

Dabei sind Teile, die Teilen in den Fig. 1 und 2 entsprechen bzw. eine ähnliche Funktion ausüben, mit den gleichen Bezugszeichen versehen, so daß auf eine eingehende Beschreibung verzichtet werden kann.

Das 5-Wege-Ventil weist fünf Anschlüsse 2, 3, 4, 4' und 5 auf. Die Anschlüsse 3 und 5 sind durch einen Durchgangskanal 6 im Ventilblock 1' für das Trägergas und die Anschlüsse 4 und 4' durch einen Durchgangskanal 9' für das Abgas direkt verbunden.

Bei geschlossenem Faltenbalgventil 17 und geöffnetem Faltenbalgventil 18 strömt das Reaktionsgas vom Anschluß 2 über den Kanal 12' und eine Bohrung 16 im Ventil-Stößel 16 in den Durchgangskanal 6; bei geschlossenem Ventil 18 und geöffnetem Ventil 17 strömt das Reaktionsgas vom Einlaß 2 in den Durchgangskanal 9' für das Abgas.

Dieses Ventil hat den Vorteil, daß durch einfaches Hintereinanderschalten gleicher Ventile 1 sowohl der Durchgangskanal 6 für das Trägergas als auch der Kanal 9 für das Abgas gebildet wird. Diese Anordnung reduziert damit Totvolumina sowie den baulichen Aufwand auf ein Minimum.

Den in den Figuren 2 und 3 dargestellten Mehr-Wege-Ventilen mit einem Durchgangskanal für das Trägergas ist in Verbindung mit der erfindungsgemäßen Gaseinlaßvorrichtung eine Reihe von Vorteilen gemeinsam:
Die erfindungsgemäßen Ventile weisen praktisch keine Toträume auf, so daß die Umschaltzeiten zwischen den einzelnen Gasströmen sehr kurz sind.

Die einzelnen Reaktionsgasströme werden nicht an- bzw. abgeschaltet, sondern lediglich zwischen dem Auslaß 4 und dem Auslaß 5 umgeschaltet, so daß keine Druckschwankungen auftreten.

Ferner können die Anschlüsse 5 bzw. 3 sowie gegebenenfalls die Anschlüsse 4 und 4', die in einer Ebene liegen, von aufeinanderfolgenden Ventilen direkt miteinander verbunden werden, wenn sie mit geeigneten Schraubverbindungen versehen werden, beispielsweise einfachen Rohrverschraubungen oder vorteilhafter Weise VCR-MALE-Schraubverbindungen und VCR-FEMALE-Schraubverbindungen. Führt man z.B. den Anschluß 3 als VCR-MALE-Verbindung und den Anschluß 5 als VCR-FEMALE-Verbindung aus, so ergeben sich besonders kurze Leitungswege, die die Schaltzeiten beim Umschalten zwischen den einzelnen Reaktionsgasströmen weiter herabsetzen.

Ferner können beide Ventilstößel 15 und 16 geschlossen werden, so daß die Anlage ohne Schwierigkeiten leckgetestet werden kann.

Vorstehend ist die Erfindung anhand von Ausführungsbeispielen beschrieben worden. Im Rahmen des allgemeinen Erfindungsgedankens - eine Gaseinlaßvorrichtung aus Mehr-Wege-Ventilen mit wenigstens einem Durchgangskanal für das Trägergas zu verwenden - sind die verschiedensten Modifikationen möglich:
Die Ausbildung des Mehr-Wege-Ventils ist selbstverständlich nicht auf die in Figur 2 oder 3 gezeigten Ausbildungen beschränkt, auch wenn diese verschiedene Vorteile haben. Beispielsweise hat das Ventil gemäß Fig. 2 den Vorteil, daß es sich leicht durch Modifizierung eines handelsüblichen 3-Wege-Ventils realisieren läßt. Hierzu wird lediglich das 3-Wege-Ventil mit einem zusätzlichen Anschluß, nämlich dem Anschluß 5 sowie mit dem Kanal 21 versehen, der den ständigen Durchgang für das Trägergas herstellt.

Das Ventil gemäß Fig. 3 hat den Vorteil, daß es kompakt aufgebaut ist und einen einfachen Aufbau der erfindungsgemäßen Vorrichtung erlaubt.

Auch ist es möglich von Hand betätigbare oder elektrisch betätigbare Ventile zu verwenden. Elektrisch oder pneumatisch betätigbare Ventile haben jedoch den Vorteil, daß die Gaseinlaßvorrichtung mittels einer Steuerung steuerbar ist, so daß die einzelnen Reaktionsgasströme zu genau definierten Zeitpunkten in das Reaktionsgefäß geleitet werden können.

## Patentansprüche

1. Verfahren zum Betreiben einer Gaseinlaßvorrichtung für Reaktionsgefäße mit einer Ventileinrichtung, über die ein oder mehrere Reaktionsgase sowie ein Trägergas in das Reaktionsgefäß einleitbar sind,
dadurch **gekennzeichnet**, daß eine Ventileinrichtung verwendet wird, die für jedes Reaktionsgas ein Mehr-Wege-Ventil (1) aufweist, das einen Durchgangskanal (6; 20, 13, 21) aufweist, dessen Auslaß (5) mit dem Durchgangskanal-Einlaß (3) des stromabwärts nächsten Mehr-Wege-Ventils (1) bzw. dem Einlaß des Reaktionsgefäßes (8) verbunden ist, und dessen Reaktionsgas-Einlaß (2) je nach Schaltung des Ventils mit dem Durchgangskanal (6; 20, 13, 21) oder einem Zweiten Auslaß (4 bzw. 4') verbunden ist, und
daß durch den Durchgangskanal (6; 20,13,21) ständig ein Trägergas und durch jeden Reaktionsgaseinlaß (2) ständig das jeweilige Reaktionsgas strömt.

2. Verfahren nach Anspruch 1,
dadurch **gekennzeichnet**, daß die zweiten Ausläße (4, 4') der einzelnen Mehr-Wege-Ventile (1) mit einem Abgaskanal (9) verbunden sind, in dem ein Unterdruck oder eine Strömung aufrechterhalten wird.

3. Verfahren nach Anspruch 1 oder 2,
dadurch **gekennzeichnet,** daß das Mehr-Wege-Ventil ein 4-Wege-Ventil ist.

4. Verfahren nach Anspruch 3,
dadurch **gekennzeichnet**, daß das 4-Wege-Ventil aus zwei einzeln betätigbaren Absperrventilen (17, 18) besteht, von denen das eine im Strömungsweg zwischen Reaktionsgas-Einlaß (2) und Durchgangskanal (6; 20, 13, 21) und das andere im Strömungsweg zwischen Reaktions-Einlaß (2) und zweiten Auslaß (4, 4') angeordnet ist.

5. Verfahren nach Anspruch 3 oder 4,
dadurch **gekennzeichnet**, daß die Ein- und Ausläße (2, 3, 4, 5) sternförmig und die Absperrventile in einer Ebene angeordnet sind.

6. Verfahren nach Anspruch 2,
dadurch **gekennzeichnet**, daß das Mehr-Wege-Ventil ein 5-Wege-Ventil mit zwei Absperrventilen (17, 18) ist, in dessen Ventilblock (1') ein Durchgangskanal (9') für das Abgas integriert ist.

7. Verfahren nach einem der Ansprüche 1 bis 6,
dadurch **gekennzeichnet**, daß die Absperrventile Faltenbalgventile sind.

8. Verfahren nach einem der Ansprüche 1 bis 7,
dadurch **gekennzeichnet**, daß die Ventile elektrisch oder pneumatisch betätigbar sind.

9. Verfahren nach einem der Ansprüche 3 bis 5,
dadurch **gekennzeichnet**, daß als 4-Wege-Ventil ein mit einem weiteren Anschluß versehenes handelsübliches 3-Wege-Ventil verwendet wird.

10. Verfahren nach einem der Ansprüche 1 bis 9, dadurch **gekennzeichnet**, daß die Ein- bzw. Ausläße (2, 3, 4, 5) Schraubverbindungen aufweisen, die eine direkte Verbindung des Trägergasauslasses des Mehr-Wege-Ventils mit dem Trägergas-Einlaß des stromabwärts nächsten Ventils bzw. der Abgas-Durchgangskanäle ermöglichen.

11. Verfahren nach einem der Ansprüche 1 bis 10,
dadurch **gekennzeichnet**, daß eine Steuereinheit vorgesehen ist, die die einzelnen Reaktionsgas-Ströme auf vorgegebene stationäre Werte einstellt, und die die einzelnen Mehr-Wege-Ventile entsprechend dem gewünschten Einlaßprogramm umschaltet.

## Claims

1. Process for operating a gas inlet device for reactor vessels, comprising a valve means through which one or more reaction gases as well as a carrier gas may be introduced into the reaction vessel,
**characterized** in that a valve means is used which comprises for each reaction gas one multi-way valve (1) having a through-passage (6; 20, 13, 21) whose outlet (5) is connected to the inlet (3) of the through-passage of the multi-way valve (1) next in the downstream direction, or the inlet of the reaction vessel (8), respectively, and whose reaction gas inlet (2) is connected to said through-passage (6; 20, 13, 21) or a second outlet (4 or 4', respectively), depending on the position of the valve, and that a carrier gas flows permanently through said through-passage (6; 20, 13, 21) while the respective gas passes in a continuous flow through each of said reaction gas inlet (2).

2. Process according to Claim 1,
**characterized** in that said second outlets (4, 4') of the individual multi-way valves (1) communicate with an exhaust gas duct (9) where a negative pressure or a flow is maintained.

3. Process according to Claim 1 or 2,
**characterized** in that said multi-way valve is a 4-way valve.

4. Process according to Claim 3,
**characterized** in that said 4-way valve consists of two shut-off valves (17, 18) adapted to be operated separately, whereof the first one is disposed in the flow path between said reaction gas inlet (2) and said through-passage (6; 20, 13, 21) while the other one is arranged in the flow path between said reaction gas inlet (2) and said second outlet (4, 4').

5. Process according to Claim 3 or 4,
**characterized** in that said inlets and outlets (2, 3, 4, 5) are arranged in a star-shaped configuration while the shut-off valves are disposed in one plane.

6. Process according to Claim 2,
**characterized** in that said multi-way valve is a 5-way having two shut-off valves (17, 18), with a through-passage (9') for the exhaust gas being integrated into the valve block of this valve.

7. Process according to any of Claims 1 to 6,
**characterized** in that said shuts valves are bellows-type valves.

8. Process according to any of Claims 1 to 7,
**characterized** in that said valves are provided for electrical or pneumatic operation.

9. Process according to any of Claims 3 to 5,
**characterized** in that a commercially available 3-way valve is used as 4-way valve provided with an additional connector.

10. Process according to any of Claims 1 to 9,
**characterized** in that said inlets or outlets (2, 3, 4, 5) are equipped with screw connectors which allow for a direct communication of the carrier gas outlet of said multi-way valve with the carrier gas inlet of the valve next in the downstream direction or said exhaust gas through-passages, respectively.

11. Process according any of Claims 1 to 10,
**characterized** in that a controller is provided to set the individual reaction gas flows to predetermined stationary values, and for changing over the individual multi-way valves in accordance with the desired admission program.

## Revendications

1. Procédé pour la mise en oeuvre d'un dispositif d'admission de gaz pour des reacteurs, comprenant des moyens de soupape par lesquels on peut introduire un ou plusieurs gaz réactionnels ainsi qu'un gaz porteur dans ledit réacteur,
**caractérisé** en ce qu'on utilise des moyens de soupape qui comprennent une soupape à plusieurs voies (1) respective pour chaque gaz réactionnel, quelle soupape est munie d'un conduit de passage (6; 20, 13, 21) dont la sorte (5) est reliée à l'entrée du conduit de passage (3) de la soupape à plusieurs voies (1) immédiatement voisine en sens aval, ou respectivement à l'entrée du réacteur, dont l'entrée de gaz réactionnel (2) est reliée audit conduit de passage (6; 20, 13, 21) ou une deuxième sorte (4 ou respectivement 4'), en fonction de la position de la soupape, et en ce qu'un gaz porteur s'écoule en continu par ledit conduit de passage (6; 20, 13, 21), pendant que le gaz respectif s'écoule en courant continu par chacune desdites entrées de gaz réactionnel (2).

2. Procédé son la revendication 1,
**caractérisé** en ce que lesdites deuxièmes sortes (4, 4') desdites soupapes à plusieurs voies individuelles (1) se trouvent en communication avec un conduit d'évacuation des gaz (9) dans lequel on maintient une dépression ou un courant.

3. Procédé selon la revendication 1 ou 2,
**caractérisé** en ce que soupape à plusieurs voies et une soupape à 4 voies.

4. Procédé selon la revendication 3,
**caractérisé** en ce que ladite soupape à 4 voies est composée de deux soupapes d'arrêt (17, 18) aptes à être commandées individuellement, dont l'une est disposée, dans le trajet du courant entre ladite entrée de gaz réactionnel (2) et ledit conduit de passage (6; 20, 13, 21), pendant que l'autre se trouve dans le trajet du courant entre ladite entrée de gaz réactionnel (2) et la deuxième sortie (4, 4').

5. Procédé selon la revendication 3 ou 4,
**caractérisé** en ce que lesdites entrées et sortes (2, 3, 4, 5) sont arrangées en forme d'étoile pendant que les soupapes d'arrêt se trouve dans un même plan.

6. Procédé son la revendication 2,
**caractérisé** en ce que ladite soupape à plusieurs voies est une soupape à 5 voies à deux soupapes d'arrêt (17, 18), ayant un conduit de passage (9') pour l'évacuation des gaz qui est intégré dans l'ensemble de cette soupape.

7. Procédé son une quelconque des revendications 1 à 6,
**caractérisé** en ce que lesdites soupapes d'arrêt sont des soupapes à soufflet.

8. Procédé son une quelconque des revendications 1 à 7,
**caractérisé** en ce lesdites soupapes sont configurées pour une commande électrique ou pneumatique.

9. Procédé selon une quelconque des revendications 3 à 5,
**caractérisé** en ce qu'on utilise une soupape à 3 voies commerciale en tant que soupape à 4 voies, qui est munie d'un distributeur additionnel.

10. Procédé selon une quelconque des revendications 1 à 9,
**caractérisé** en ce que lesdites entrées ou sortes (2, 3, 4, 5) sont munies de raccords à vis qui permettent une communication en direct de la sortie de gaz porteur de ladite soupape à plusieurs voies avec l'entrée de gaz porteur de la soupape immédiatement voisine en aval ou respectivement lesdits conduits de passage d'évacuation des gaz.

11. Procédé selon une quelconque des revendications 1 à 10,
**caractérisé** en ce qu'une unité de commande est prévue pour porter les courants individuels de gaz réactionnel à des valeurs déterminées stationnaires et pour commuter les soupapes à plusieurs voies individuelles selon le programme d'admission choisi.
